# FASCICULE DE BREVET EUROPEEN

(11) **EP 3 501 291 B1**
(45) Date de publication et mention de la délivrance du brevet: **16.10.2019**
(21) Numéro de dépôt: 18215467.4
(22) Date de dépôt: 21.12.2018
(51) Int. Cl.: A23F 3/22, A23F 3/14, A61K 9/00, A61K 9/16

(54) **PROCÉDÉ DE FABRICATION D'INFUSIONS OU DE THÉS CONTENANT DES ACTIFS D'ORIGINE VÉGÉTALE, ANIMALE OU MINERALE**
VERFAHREN ZUR HERSTELLUNG VON INFUSIONEN ODER TEES, WELCHE EINEN WIRKSTOFF PFLANZLICHEN, TIERISCHEN ODER MINERALISCHEN URSPRUNGS ENTHALTEN
PROCESS FOR THE PREPARATION OF INFUSIONS OR TEAS COMPRISING ACTIVE COMPOUNDS OF PLANT, ANIMAL OR MINERAL ORIGIN

(30) Priorité: 22.12.2017 FR 1762919
(43) Date de publication de la demande: 26.06.2019
(73) Titulaire: Thés De La Pagode, 75008 Paris (FR)
(72) Inventeur: ZEIL, Jean-Marc, 92150 SURESNES (FR); GUERRET, Olivier, 46170 PERN (FR); DUZAN, Gilles, 64230 ARTIGUELOUVE (FR)
(74) Mandataire: Cabinet Beau de Loménie

(56) Documents cités:
- EP-A1- 2 608 677
- WO-A1-2009/030666
- DE-A1- 2 535 234
- US-A1- 2014 212 545

## Description

La présente invention concerne un procédé de préparation d'infusions ou de thés contenant des principes actifs d'origine végétale, animale ou minérale.

### Etat de l'art

Il existe de nombreux procédés pour préparer des thés ou des infusions comprenant des plantes ou des fragments de plantes comme support (feuilles de thés, queues de cerise, écorces...) sur lesquels sont déposés des principes actifs (extraits secs de plantes médicinales...).

Ces préparations permettent de délivrer, dans le contexte d'une infusion classique, des principes actifs intéressants pour la santé ou le bien-être des consommateurs. Généralement, les extraits de plante utilisés comme principes actifs dans ces préparations, se présentent sous forme de poudre de granulométrie variant entre 5 à 500µm, et sont souvent obtenus par nébulisation.

Certains de ces procédés consistent à simplement mélanger, dans une même cuve, les supports avec la poudre d'actifs en présence d'une solution aqueuse additionnée ou non d'un éventuel liant (alginate, gélatine...)(voir par exemple EP2217084B1) puis de sécher le composé obtenu par exemple sur un lit fluidisé.

L'homme du métier se heurte alors à deux problèmes majeurs :
- La première difficulté, liée à la forme pulvérulente des actifs, est de répartir de façon homogène les extraits secs d'actifs et sans qu'il n'y ait d'agglomération locale de ces derniers. Ce problème de non homogénéité des dépôts d'additifs sur des supports formés de fragments de plantes a été bien identifié dans le cas particulier des thés pré-sucrés pour lesquels des additifs tels que le dextrose sont déposés sur des feuilles de thé et pour lesquels il est aussi important d'éviter la formation d'agglomérats localisés. (voir par exemple le brevet EP 2608677B1). En effet, la formation de grains d'actifs visibles à l'oeil nu est préjudiciable à la qualité visuelle du produit ainsi qu'à une répartition uniforme des principes actifs sur l'ensemble des supports.
- La deuxième difficulté est que souvent une partie des actifs est perdue puisqu'elle se colle aux parois de la cuve. Cette perte de principe actif doit être minimisée.

Le brevet WO2009/030666 propose une première solution à ces deux problèmes. Le procédé décrit est constitué de deux étapes :
- une étape de pulvérisation d'une solution aqueuse (eau additionnée éventuellement d'un liant alimentaire de type alginate ou gélatine) mais exempte de principe actif,
- une seconde étape de saupoudrage du principe actif sous forme de poudre suivi d'un séchage du complexe formé.

Dans ce procédé, la première étape d'imprégnation du support (feuilles, écorces, queues de cerise, racines...) nécessite l'imprégnation des supports par une solution aqueuse (entre 2% et 25% en poids de solution aqueuse contenant éventuellement un liant alimentaire). Après adsorption de la poudre d'actif, un complexe support/liant/actif est obtenu qui doit être séché. Cette étape de séchage est une des limitations de ce procédé car elle est à la fois consommatrice d'énergie et de temps. Ces problèmes de temps de séchage ne sont pas abordés dans ce brevet mais sont bien identifiés par l'homme du métier comme une des étapes limitant les procédés de production. US 2014/212545 A1 divulgue un procédé de préparation d'un produit de thé comprenant les étapes consistant à: (i) ajouter une solution aqueuse comprenant plus de 5 à 50 parties en poids de monosaccharide à 50-95 parties en poids de thé de feuille noire pour obtenir un mélange, et (ii) séchage du mélange à une teneur en eau inférieure à 10% en poids pour obtenir un produit de thé, dans lequel le monosaccharide est le dextrose.

Un premier objet de la présente invention est donc de proposer une nouvelle solution à la double problématique d'une adsorption uniforme sur les supports à base de fragments de plante et d'une limitation de la perte de produits actifs.

Un deuxième objet de l'invention est de diminuer les temps de séchage nécessaires à l'obtention du produit commercialisable.

La demanderesse a constaté qu'il était possible de répondre à cette double problématique tout en diminuant les temps de séchage du produit final, en combinant l'utilisation d'une solution hydroalcoolique et de la gomme arabique comme liant. Cette combinaison conduit à l'obtention d'infusions ou de thés pour lesquels le dépôt des extraits secs d'actifs est optimisé (pas de perte et dépôt uniforme) et pour lesquels les temps de séchage sont raccourcis par comparaison aux procédés classiques. L'insolubilité de la gomme arabique dans l'éthanol rend particulièrement pointues les conditions de mise en oeuvre de cette solution.

### Résumé de l'invention

La présente invention, en accord avec le premier objet de l'invention, concerne un procédé de préparation d'infusions ou de thés comprenant un support constitué de plantes entières ou de fragments de celles-ci, et d'un ou plusieurs principe(s) actif(s) adsorbés sur la surface dudit support, caractérisé en ce qu'il comprend les étapes suivantes :
a) dans un premier récipient, mélanger de la gomme arabique avec de l'eau et de l'éthanol,
b) dans un deuxième récipient, mélanger des plantes entières ou des fragments de celles-ci avec un ou plusieurs principe(s) actif(s),
c) ajouter le mélange obtenu à l'étape a) au mélange obtenu à l'étape b), et
d) sécher le mélange obtenu à l'étape c).

La demanderesse a démontré que l'étape de séchage, qui peut être réalisée par exemple sur un lit fluidisé, par injection d'air chaud, est nettement raccourcie.

### Description détaillée

### Définitions

Le terme « arôme » désigne est un composé volatil qui permet une perception du goût et de l'odeur. Il peut s'agir d'un arôme naturel ou d'un arôme synthétique, par exemple de l'arôme naturel de menthe, de l'arôme naturel de bergamote, de l'arôme naturel de citron, de l'arôme de fleur d'oranger, ou tout autre type d'arôme. Dans le cadre de la présente invention, l'arôme se présente généralement sous forme liquide.

Le terme « support » désigne des plantes entières ou des fragments de celles-ci. Il peut s'agir de plantes entières ou de fragments de celles-ci. Par exemple, le support peut être des parties racinaires et/ou des parties aériennes de plante. Dans le cadre de la présente invention, le support peut être choisi parmi des feuilles d'aneth, des fleurs d'aubépine, des morceaux d'aubier de tilleul, des fruits d'angélique, des feuilles d'aspérule odorante, des morceaux de racines d'aunée, des feuilles ou des fruits d'anis vert, des feuilles d'alchemille, des feuilles de basilic, de la badiane, des morceaux de racine de la bardane, des écorces de bergamote, des fleurs de bigaradier, des feuilles de bouillon blanc (ou molène), des fleurs de bruyère, des fleurs de bourrache, des queues de cerise, des fleurs de camomille, des morceaux de rhizome de chiendent, des feuilles de cassis, des fleurs de cerisier, des écorces de citron vert, des feuilles de citronnelle, des graines de cumin, des graines de coriandre, des graines de cardamone, des fleurs de coquelicot, des morceaux d'écorce de cannelle, du cynorhodon, des feuilles d'eucalyptus, des graines de fenugrec, des graines de fenouil, des pépins de framboises, des feuilles de frêne, des graines de genièvre, des morceaux de racine de gentiane, des morceaux de racine de guimauve, des morceaux de racine de ginseng, des morceaux de rhizome de gingembre, des fleurs d'hibiscus, des cônes de houblon, des fleurs de jasmin, des noix de Kola, des feuilles de lierre, des feuilles d'ortie blanche, de la lavande, des fleurs, des tiges et des feuilles d'origan, des feuilles de maté, des feuilles de menthe, des feuilles de marjolaine, des fleurs de mauve, des feuilles de mélisse, des fleurs de millefeuille, des feuilles de myrtillier, des feuilles de ményanthe, des feuilles d'origan, des feuilles et des fleurs d'oranger, des écorces d'oranges, des feuilles d'olivier, des feuilles et des fleurs de passiflore, des tiges et des feuilles de persil, des écorces de bois de panama, des feuilles et tiges de prêle des champs, des bourgeons de pin, des racines de pissenlit, des fleurs et des feuilles de pensées sauvage, des écorces de quinquina, des racines de réglisse, des fleurs de reine des prés, des feuilles de mûrier, des feuilles de rooibos, des feuilles de romarin, des boutons de roses, des tiges de rhubarbe, des feuilles de sarriette, des feuilles de serpolet, des feuilles de sauge, des fleurs de sureau, des feuilles de thé, des fleurs et feuilles de tilleul, des feuilles de thym, des feuilles de verveine, des feuilles de vigne rouge, ou leurs mélanges.

Par « solution hydroalcoolique », on entend l'eau et l'éthanol ajoutés à l'étape a) du procédé selon l'invention.

Un premier objet de la présente invention concerne un procédé de préparation d'infusions ou de thés comprenant un support constitué de plantes entières ou de fragments de celles-ci, et d'un ou plusieurs principe(s) actif(s) adsorbés sur la surface dudit support, caractérisé en ce qu'il comprend les étapes suivantes :
a) dans un premier récipient, mélanger de la gomme arabique avec de l'eau et de l'éthanol,
b) dans un deuxième récipient, mélanger des plantes entières ou des fragments de celles-ci avec un ou plusieurs principe(s) actif(s),
c) ajouter le mélange obtenu à l'étape a) au mélange obtenu à l'étape b), et
d) sécher le mélange obtenu à l'étape c).

### Etape a)

L'étape a) consiste à mélanger dans un premier récipient de la gomme arabique avec de l'eau puis de l'éthanol. Tous types de récipients peuvent être utilisés, le volume du récipient étant simplement adapté à la quantité d'infusions ou de thés que l'on souhaite produire.

La gomme arabique est tout d'abord mélangée avec de l'eau, puis l'éthanol est ajouté au mélange gomme arabique/eau.

La gomme arabique, l'eau et l'éthanol peuvent être ajoutés dans le premier récipient dans n'importe quel ordre, par exemple la solution hydroalcoolique avant la gomme arabique ou inversement. Il est par contre préférable que la limite de précipitation de la gomme arabique dans la solution hydroalcoolique ne soit pas atteinte dans le mélange obtenu à l'étape a). Ainsi, la gomme arabique est de préférence entièrement solubilisée dans le mélange obtenu à l'étape a).

La masse de l'eau ajoutée à l'étape a) est adaptée à la masse des plantes entières ou des fragments de celles-ci utilisés à l'étape b). Avantageusement, la masse de l'eau ajoutée à l'étape a) va de 2% à 25% de la masse des plantes entières ou des fragments de celles-ci utilisés à l'étape b).

La masse de gomme arabique ajoutée à l'étape a) est adaptée à la masse de l'eau introduite à l'étape a). Avantageusement, la masse de gomme arabique ajoutée à l'étape a) va de 1% à 10% de la masse de l'eau introduite à l'étape a).

Dans un mode de réalisation particulier, l'étape a) comprend en outre l'ajout d'un ou de plusieurs arôme(s) dans le premier récipient. L'ajout de l'arôme peut se faire à tout moment au cours de l'étape a), par exemple l'arôme peut être ajouté en même temps que l'eau et/ou l'éthanol, avant l'eau et/ou l'éthanol, après l'eau et/ou l'éthanol ou même être déjà présent dans l'eau et/ou l'éthanol. La masse d'arôme ajouté à l'étape a) peut aller jusqu'à 15% de la masse du mélange obtenu à l'étape d).

Le mélange peut se faire sous agitation, par brassage, par dispersion ou par pulvérisation de l'eau puis de l'éthanol. Le mélange peut se faire avec un mélangeur, par exemple un mélangeur rotatifs, à pâles, à turbine ou du type vis sans fin.

### Etape b)

L'étape b) consiste à mélanger dans un deuxième récipient des plantes entières ou des fragments de celles-ci avec un ou plusieurs principe(s) actif(s). Tous types de récipients peuvent être utilisés, le volume du récipient étant simplement adapté à la quantité d'infusions ou de thés que l'on souhaite produire.

Le ou les principes actif(s) peut/peuvent être d'origine végétale, animale et/ou minérale. De préférence, le ou les principe(s) actif(s) est/sont à visée médicinale ou de bien-être.

Dans un mode de réalisation particulier, un principe actif peut être un extrait sec de plante, par exemple un extrait sec de plante connue pour son utilisation dans les domaines de la phytothérapie, de la santé, du bien-être et/ou de la beauté. Avantageusement, un extraits secs de plante peut être choisi parmi un extrait sec de pépins de raisin, un extrait sec de mélisse, un extrait sec de houblon, un extrait sec de café vert, un extrait sec de guarana, un extrait sec de pissenlit, un extrait sec de valériane, un extrait sec de fleur d'oranger, un extrait sec de radis noir, un extrait sec de vigne rouge, un extrait sec de ginseng, un extrait sec d'hibiscus, un extrait sec d'ortie, un extrait sec de prêle, un extrait sec de passiflore, un extrait sec d'aubépine, un extrait sec d'orange amère, un extrait sec de gingembre, un extrait sec d'acérola, un extrait sec de badiane, un extrait sec de romarin, un extrait sec de safran, un extrait sec de curcuma, un extrait sec de reine des prés ou un mélange de ceux-ci.

Dans un autre mode de réalisation particulier, un principe actif peut être un extrait sec d'algues. Un extrait sec d'algues peut contenir du β-carotène, des polysaccharides, des acides aminés, des peptides et/ou des protéines.

Dans un autre mode de réalisation particulier, un principe actif peut être un extrait sec d'origine animale tel que la gelée royale lyophilisée, le propolis ou le collagène.

Dans un autre mode de réalisation particulier, un principe actif peut être un extrait sec d'origine minérale tel que les sels minéraux, les oligo-éléments, les macro-minéraux tels que le sodium (Na), le potassium (K), le calcium (Ca), le magnésium (Mg).

Dans un mode de réalisation particulier, la masse du ou des principe(s) actif(s) ajoutée à l'étape b) est comprise entre 0,5% et 75% de la masse du mélange final support-principe(s) actif(s).

De préférence, le procédé est optimisé de façon à ce que l'ensemble du ou des principe(s) actif(s) soit adsorbé sur le support.

Avantageusement, la masse du support ajouté à l'étape b) va de 25% à 99,5% de la masse du produit final obtenu à l'étape d) ou à l'étape e). La masse du produit final obtenu à l'étape d) ou à l'étape e) correspond à la somme des masses du support, du ou des principe(s) actif(s) et du ou des éventuel(s) arôme(s). En effet, l'éthanol et l'eau sont éliminés lors de l'étape de séchage.

Le mélange peut se faire sous agitation, par brassage, par dispersion ou par pulvérisation du ou des principe(s) actif(s). Le mélange peut se faire avec un mélangeur, par exemple un mélangeur rotatifs, à pâles, à turbine ou du type vis sans fin.

### Etape c)

L'étape c) consiste à ajouter le mélange obtenu à l'étape a) au mélange obtenu à l'étape b). Avantageusement, le mélange contenu dans le premier récipient est ajouté dans le deuxième récipient qui contient le support et le ou les principe(s) actif(s).

L'ajout peut se faire par tout moyen approprié. Il néanmoins est préférable que l'ajout soit effectué de manière progressive et sous agitation, soit par brassage, soit par dispersion, soit par pulvérisation du mélange obtenu à l'étape a).

### Etape d)

L'étape d) consiste à sécher le mélange obtenu à l'étape c). Cette étape peut se faire directement dans le récipient utilisé à l'étape c), par exemple le deuxième récipient, ou dans un autre environnement, par exemple un récipient différent de celui utilisé à l'étape c).

L'étape de séchage peut être réalisée dans une étuve, par injection d'air sec chauffé ou non sur le mélange obtenu à l'étape c), sur un lit fluidisé ou par tout autre moyen permettant de réduire l'humidité relative du mélange obtenu à l'étape c). Avantageusement, le séchage permet d'éliminer tout ou partie de l'eau et tout l'éthanol.

### Etape e) optionnelle

L'étape e), optionnelle, consiste à ajouter un ou plusieurs arôme(s) au mélange obtenu à l'étape d). La masse d'arôme(s) ajouté(s) à l'étape e) peut aller jusqu'à 15% de la masse du mélange obtenu à l'étape d). L'ajout à ce stade du procédé le ou les arôme(s) permet(tent) d'apporter une qualité gustative supplémentaire aux infusions et thés obtenus par ce procédé.

Avantageusement, la somme des masses d'arôme(s) ajouté(s) au cours de toutes les étapes du procédé va jusqu'à 15% de la masse du mélange obtenu à l'étape d).

### Modes de réalisation particuliers du procédé selon l'invention

Dans un mode de réalisation particulier, le ratio massique entre (i) la masse de l'eau et de l'éthanol ajoutés à l'étape a) et (ii) la masse du mélange obtenu à l'étape d) est compris entre 0.02 et 0.25.

Dans un mode de réalisation particulier, le ratio massique entre (i) la masse de la gomme arabique ajoutée à l'étape a) et (ii) la masse de l'eau ajoutée à l'étape a) est compris entre 0,01 et 0,1, de préférence entre 0,02 et 0,05.

Dans un mode de réalisation particulier, le ratio massique entre (i) la masse de l'eau ajoutée à l'étape a) et (ii) la masse de l'éthanol ajoutée à l'étape a) est compris entre 0,05 et 0,15, de préférence entre 0,1 et 0,15.

Dans un mode de réalisation particulier, la quantité de principes actifs est comprise entre 0,5% et 75% du poids du mélange final support-principe(s) actif(s).

### Avantages du procédé

Le procédé selon l'invention permet grâce à l'utilisation de la solution hydroalcoolique additionnée de gomme arabique d'adsorber de manière uniforme les principes actifs sur le support. En suivant le procédé selon l'invention, il n'est pas observé de formation d'agglomérats de principes actifs préjudiciables à la vue ni de pertes sur les parois du mélangeur.

Un autre avantage du procédé selon l'invention est que le taux d'eau nécessaire à l'adsorption des principes actifs est diminué du fait de la présence de l'éthanol. Comme l'évaporation de l'éthanol est plus rapide que celle de l'eau, puisque son point d'ébullition est de 78.4°C au lieu de 100°C, il en résulte un temps de séchage diminué de manière sensible lors de l'étape de séchage. En conséquence, le procédé selon l'invention est plus économique en temps et en énergie.

Un autre avantage du procédé selon l'invention est qu'il n'y a pas de traces résiduelles d'alcool après le séchage et que les qualités gustatives des produits ne sont pas affectées par l'utilisation de l'éthanol au cours du procédé.

Un avantage du procédé selon l'invention est la possibilité de réaliser une solution hydroalcoolique contenant la gomme arabique en tant que liant. Par comparaison, ce type de solution hydroalcoolique est par exemple impossible avec un autre liant connu de l'homme du métier comme l'amidon. En effet, dès qu'on rajoute de l'éthanol dans une solution aqueuse d'amidon, on observe la précipitation de l'amidon dès l'ajout de la première goutte d'éthanol.

Un autre avantage de l'utilisation de la gomme arabique dans le procédé selon l'invention est qu'elle a un index glycémique beaucoup plus faible que d'autres liants habituellement utilisés comme par exemple l'amidon et qu'elle a par surcroit un effet pré-biotique, puisque constituée de fibres solubles, intéressant dans ce contexte d'infusions ayant des vertus médicinales ou pour le bien-être.

Un autre avantage du procédé selon l'invention est la possibilité, dans un contexte de consommation bénéfique pour la santé et le bien-être, de s'approvisionner en composants issus de l'agriculture biologique (dits « bio »). En ce qui concerne les supports et les principes actifs, il est relativement aisé de s'approvisionner avec des produits issus de l'agriculture biologique. En revanche, certains types de liants classiques comme les alginates ne peuvent prétendre à un label « issus de l'agriculture biologique », contrairement à la gomme arabique utilisée dans le procédé selon l'invention pour laquelle il est possible de se fournir en gomme arabique « issue de l'agriculture biologique ». De même, l'approvisionnement en éthanol « issu de l'agriculture biologique » est aisément réalisable. Ce label « issu de l'agriculture biologique » est un avantage économique intéressant du procédé selon l'invention.

### Support

La description concerne également un système de délivrance d'un ou de plusieurs principe(s) actif(s) caractérisé en ce qu'il comprend des infusions ou des thés obtenus par la mise en oeuvre du procédé selon l'invention.

La présente invention est illustrée par les exemples suivants.

### Exemples

### Matériels et méthodes

Les matières premières qui ont été utilisées dans les exemples ci-dessous ont des origines variées :
- Extrait sec d'aubépine bio (sommité fleurie) - PLANTEX
- Extrait sec d'orange amère bio (fleur) - PLANTEX
- Extrait sec de houblon (cône) bio - PLANTEX
- Extrait sec de Guarana bio - NATUREX
- Arôme fleur d'oranger - Néroliane
- Arôme naturel de menthe - Néroliane
- Arôme naturel de Bergamote - Néroliane
- Arôme naturel de citron - Néroliane
- Gomme arabique bio - NEXIRA
- Éthanol absolu nature agricole bio - Ciron
- Alginate de sodium - Sigma Aldrich
- Feuilles de thé vert bio : Kloth & Köhnken
- Feuilles de maté bio : Hälssen & Lyon gmbh
- Feuilles de thé rouge rooibos bio : Hälssen & Lyon gmbh

Deux modes de réalisation du procédé ont été mis en oeuvre dans les exemples ci-dessous selon le moment où l'on ajoute les arômes, illustrés dans les exemples 1, 2 et 3. Notons que l'ajout d'arôme est facultatif et qu'en son absence les deux modes de réalisation sont identiques, cet absence d'arôme est illustré dans l'exemple 4.

### Méthode 1 : ajout des arômes après l'étape de séchage

Dans un ballon de 2 L, on a introduit une quantité prédéterminée de fragments de plantes ou de plantes entières comme support. Ces plantes ont ensuite été homogénéisées par rotation (à l'aide d'un rotavapor à température ambiante). Puis on a introduit la quantité voulue d'extraits secs ou de principes actifs et on a mélangé ces solides par rotation du ballon pendant au moins 10 min.

En parallèle, on a préparé une solution hydro-alcoolique à 3% de gomme arabique : Dans un bécher muni d'un barreau aimanté, on a introduit l'eau, puis l'éthanol à 100% et la gomme arabique. On a mélangé pendant environ 1 heure jusqu'à parfaite dissolution de la gomme arabique.

On a introduit alors goutte à goutte (ou en pulvérisation) une partie de la solution hydro-alcoolique à 3% de gomme arabique, sur la préparation initiale de support contenue dans le ballon de 2L. On agite par rotation au fur et à mesure du mouillage. L'opération d'introduction et de mélange est reproduite jusqu'à avoir introduit toute la solution hydro-alcoolique à 3% de gomme arabique. La poudre d'extrait sec a alors adhéré au support à base de fragment de plantes par l'effet collant de la gomme arabique.

L'éthanol et une partie de l'eau ont ensuite été éliminés, par séchage, pour retrouver un taux d'humidité standard pour ce genre d'infusions ou de thés. Le séchage a été effectué soit par soufflage d'air sec à travers la préparation en homogénéisant toutes les ½ heures, soit à l'étuve à 40°C en agitant en permanence. Le contrôle a été fait par perte de poids.

On a ensuite préparé une solution d'arômes en mélangeant les différents arômes liquides.

Cette solution d'arômes a alors été introduite sur la préparation séchée précédente, tout en l'homogénéisant.

### Méthode 2 : ajout des arômes dans la solution hydroalcoolique

Dans un ballon de 2 L, on a introduit une quantité prédéterminée de fragments de plantes ou de plantes entières comme support. Ces plantes ont ensuite été homogénéisées par rotation (à l'aide d'un rotavapor à température ambiante). Puis on a introduit la quantité voulue d'extraits secs et on a mélangé ces solides par rotation du ballon pendant au moins 10 min.

En parallèle, on a préparé une solution hydro-alcoolique à 3% de gomme arabique : dans un bécher muni d'un barreau aimanté, on a introduit l'eau, puis l'éthanol à 100% et la gomme arabique. On a mélangé pendant environ 1 heure jusqu'à parfaite dissolution de la gomme arabique.

On a prélevé une partie de la solution hydro-alcoolique ainsi obtenue et on a introduit les différents arômes liquides dans la solution restante. La solution a ensuite bien été mélangée.

On a introduit alors goutte à goutte (ou en pulvérisation) une partie de la solution hydro-alcoolique à 3% de gomme arabique, contenant les arômes, sur la préparation initiale de support contenue dans le ballon de 2L. On a agité par rotation au fur et à mesure du mouillage. L'opération d'introduction et de mélange a été reproduite jusqu'à avoir introduit toute la solution hydro-alcoolique à 3% de gomme arabique. La poudre d'extrait sec a alors adhéré au support à base de fragment de plantes par l'effet collant de la gomme arabique.

Une partie de l'eau et tout l'éthanol ont ensuite été éliminés, par séchage pour retrouver un taux d'humidité standard pour ce genre d'infusions. Le séchage a été effectué soit par soufflage d'air sec à travers la préparation en homogénéisant toutes les ½ heures, soit à l'étuve à 40°C en agitant en permanence. Le contrôle a été fait par perte de poids.

### Exemple 1 : Préparation avec support de thé et de maté et extrait sec de guarana

Dans cet exemple, on a appliqué la méthode 1 avec les quantités des divers produits données dans le tableau 1 :

**Tableau 1**

| **Infusion 1** | | Quantité en poids (g) |
|---|---|---|
| Support | feuilles de thé vert bio | 80 |
| | feuilles de maté bio | 13,8 |
| Principes actifs | extrait sec de guarana bio | 4,94 |
| Solution hydroalcoolique avec liant | eau | 9,49 |
| | éthanol à 100% bio | 1,67 |
| | gomme arabique bio | 0,34 |
| Moyen de séchage | soufflage air sec | |
| Arômes (ajoutés après séchage) | arôme naturel de citron | 2,07 |
| | arôme naturel de menthe | 1,73 |
| | arôme naturel de bergamote | 0,69 |

On a observé qu'aucun grain d'extrait sec n'est accroché aux parois du récipient.

Pour vérification de l'adhésion des extraits secs sur le support, on a tamisé la préparation, sur deux grilles différentes : 89.5% de la préparation a été retenue sur la grille de tamis 1mm et 10.5 % sur celle de 0.2 mm, on en a déduit que tout l'extrait sec (de taille très inférieure à 0.2 mm) a été adsorbé sur le support.

Par ailleurs, un contrôle visuel a permis de noter que la préparation finale était d'apparence visuelle très homogène sans présence d'agglomérats d'extraits secs mal répartis.

On a également constaté un temps de séchage nettement raccourci par rapport au même procédé sans éthanol. L'utilisation de l'éthanol, puis son évaporation complète n'a par ailleurs pas modifié le goût de l'infusion.

### Exemple 2 : Préparation avec support Rooibos et divers extraits secs

Cet exemple sert à illustrer le fait que le procédé décrit dans l'invention peut s'appliquer à différents types de supports et de principes actifs.

Dans cet exemple aussi on a utilisé la méthode 1 d'ajout des arômes après le séchage du mélange support/liant/principe actif.

Les quantités des divers produits sont données dans le tableau 2:

**Tableau 2**

| **Infusion 2** | | Quantité en poids (g) |
|---|---|---|
| Support | Thé rouge rooibos bio | 89,9 |
| Principes actifs | extrait sec d'orange amère bio | 2,7 |
| | extrait sec de houblon bio | 1,3 |
| | extrait sec d'aubépine bio | 4,0 |
| Solution hydroalcoolique avec liant | eau | 3,57 |
| | éthanol bio à 100% | 0,63 |
| | gomme arabique bio | 0,13 |
| Moyen de séchage | soufflage air sec | |
| Arômes | arôme naturel de fleur d'oranger | 2 |

Comme dans l'exemple précédent, on a observé une très bonne adsorption des principes actifs sur le support, sans trace visible d'agglomérats et les parois de l'appareillage étaient exemptes d'extraits secs.

On a constaté aussi un temps de séchage nettement raccourci par rapport au même procédé sans éthanol. L'utilisation de l'éthanol, puis son évaporation complète n'a par ailleurs pas modifié pas le goût de l'infusion.

### Exemple 3 : ajout des arômes dans la solution hydroalcoolique

Cet exemple reprend les mêmes produits et les mêmes quantités que ceux utilisés dans les deux exemples précédents mais en utilisant la méthode 2 d'ajout des arômes dans la solution hydroalcoolique, avec un séchage en étuve à 40°C et une homogénéisation toutes les 30 minutes afin de favoriser un séchage homogène.

Les quantités des divers produits sont données dans les tableaux 3 et 4:

**Tableau 3**

| **Infusion 3** | | Quantité en poids (g) |
|---|---|---|
| Support | feuilles de thé vert bio | 80 |
| | feuilles de maté bio | 13,8 |
| Principes actifs | extrait sec de guarana bio | 4,94 |
| Solution hydroalcoolique avec liant | eau | 9,49 |
| | éthanol bio à 100% | 1,67 |
| | gomme arabique bio | 0,34 |
| Arômes introduits dans la solution hydroalcoolique | arôme naturel de citron | 2,07 |
| | arôme naturel de menthe | 1,73 |
| | arôme naturel de bergamote | 0,69 |
| Moyen de séchage | séchage en étuve à 40°C | |

**Tableau 4**

| **Infusion 4** | | Quantité en poids (g) |
|---|---|---|
| Support | Thé rouge rooibos bio | 89,9 |
| Principes actifs | extrait sec d'orange amère bio | 2,7 |
| | extrait sec de houblon bio | 1,3 |
| | extrait sec d'aubépine bio | 4,0 |
| Solution hydroalcoolique avec liant | eau | 3,57 |
| | éthanol bio à 100% | 0,63 |
| | gomme arabique bio | 0,13 |
| Arômes introduits dans la solution hydroalcoolique | arôme naturel de fleur d'oranger | 2 |
| Moyen de séchage | séchage en étuve à 40°C | |

Pendant l'application de ce mode de réalisation du procédé selon l'invention, on a constaté une fois de plus par un contrôle visuel que les principes actifs ont bien été adsorbés sur les supports, sans agglomérats et de manière homogène, et qu'il n'y a pas eu de dépôt d'extraits secs sur les parois de l'appareillage.

Les qualités gustatives des infusions obtenues par ce mode de réalisation du procédé, avec ajout des arômes après le séchage, ont de plus été améliorées par une moindre évaporation des arômes.

### Exemple 4 : comparaison de l'efficacité du séchage

Dans cet exemple, on a préparé tout d'abord deux mélanges avec les mêmes produits et même quantités que dans les exemples précédents, mais sans ajout d'arôme et sans séchage. On a obtenu les infusions 5 et 6 pour lesquelles les quantités des différents produits sont données dans les tableaux 5 et 6.

**Tableau 5**

| **Infusion 5** | | Quantité en poids (g) | |
|---|---|---|---|
| Support | feuilles de thé vert bio | 80 | |
| | feuilles de maté bio | 13,8 | |
| Principes actifs | extrait sec de guarana bio | 4,94 | |
| Solution liante | eau | 9,49 | 11,16 |
| | éthanol à 100% | 1,67 | |
| | gomme arabique bio | 0,34 | |

**Tableau 6**

| **Infusion 6** | | Quantité en poids (g) | |
|---|---|---|---|
| Support | Thé rouge rooibos bio | 89,9 | |
| Principes actifs | extrait sec d'orange amère bio | 2,7 | |
| | extrait sec de houblon bio | 1,3 | |
| | extrait sec d'aubépine bio | 4,0 | |
| Solution liante | eau | 3,57 | 5,20 |
| | éthanol à 100% | 0,63 | |
| | gomme arabique bio | 0,13 | |

En parallèle, on a préparé deux autres mélanges (infusions 7 et 8, hors invention) avec les mêmes produits et les mêmes quantités que pour les infusions 5 et 6, excepté la solution liante.

En effet, on a remplacé la solution hydroalcoolique (85% d'eau/15% éthanol) à 3% de gomme arabique par une solution d'eau à 2% d'alginate de sodium (liant très utilisé dans ce type d'infusions, et dans cette proportion).

Les quantités des divers produits sont données dans les tableaux 7 et 8 :

**Tableau 7**

| **Infusion 7** | | Quantité en poids (g) |
|---|---|---|
| Support | feuilles de thé vert bio | 80 |
| | feuilles de maté bio | 13,8 |
| Principes actifs | extrait sec de guarana bio | 4,94 |
| Solution liante | eau | 11,16 |
| | alginate de sodium | 0,24 |

**Tableau 8**

| **Infusion 8** | | Quantité en poids (g) |
|---|---|---|
| Support | Thé rouge rooibos bio | 89,9 |
| Principes actifs | extrait sec d'orange amère bio | 2,7 |
| | extrait sec de houblon bio | 1,3 |
| | extrait sec d'aubépine bio | 4,0 |
| Solution liante | eau | 5,20 |
| | alginate de sodium | 0,11 |

Les quatre produits, deux selon l'invention (infusions 5 et 6) et deux hors invention (infusions 7 et 8) ont été mis en séchage dans une étuve ventilée à 40°C, avec homogénéisation régulière pour éviter un séchage uniquement superficiel.

Au bout d'un temps donné, suffisant pour que tout l'éthanol soit évaporé et que la majorité de l'eau ajoutée lors du procédé soit évaporée, on a mesuré leur masse finale, ce qui permet de comparer la perte en masse d'eau.

On a ainsi comparé le séchage du mélange « infusion 6 » avec celui du mélange « infusion 8 » et le séchage du mélange « infusion 7 » avec celui du mélange « infusion 9 ».

On a obtenu les résultats présentés dans les tableaux 9 et 10 suivants, qui donnent les pertes de masse respectives de ces deux couples de mélanges.

**Tableau 9**

| | Infusion 6 (selon l'invention) | Infusion 8 (hors invention) |
|---|---|---|
| perte de masse après le même temps de séchage | 11g | 9.2g |

**Tableau 10**

| | Infusion 7 (selon l'invention) | Infusion 9 (hors invention) |
|---|---|---|
| perte de masse après le même temps de séchage | 5.1g | 4g |

Dans les deux cas, on a constaté que pour un même temps de séchage le procédé selon l'invention a permis d'évaporer plus d'eau. Il est donc plus rapide et moins couteux en énergie de sécher les mélanges support/liant/principes actifs produits grâce au procédé selon l'invention qu'avec des procédés utilisant seulement de l'eau (sans éthanol) et des liants plus conventionnel comme l'alginate de sodium.

## Revendications

1. Procédé de préparation d'infusions ou de thés comprenant un support constitué de plantes entières ou de fragments de celles-ci, et d'un ou plusieurs principe(s) actif(s) adsorbés sur la surface dudit support, **caractérisé en ce qu'**il comprend les étapes suivantes :
a) dans un premier récipient, mélanger de la gomme arabique avec de l'eau et de l'éthanol,
b) dans un deuxième récipient, mélanger des plantes entières ou des fragments de celles-ci avec un ou plusieurs principe(s) actif(s),
c) ajouter le mélange obtenu à l'étape a) au mélange obtenu à l'étape b), et
d) sécher le mélange obtenu à l'étape c).

2. Procédé selon la revendication 1, **caractérisé en ce que** le ratio massique entre (i) la masse de l'eau et la masse de l'éthanol ajoutés à l'étape a) et (ii) la masse du mélange obtenu à l'étape d) est compris entre 0.02 et 0.25.

3. Procédé selon l'une quelconque des revendications précédentes, **caractérisé en ce que** le ratio massique entre (i) la masse de la gomme arabique ajoutée à l'étape a) et (ii) la masse de l'eau ajoutée à l'étape a) est compris entre 0,01 et 0,1, de préférence entre 0,02 et 0,05.

4. Procédé selon l'une quelconque des revendications précédentes, **caractérisé en ce que** le ratio massique entre (i) la masse de l'eau ajoutée à l'étape a) et (ii) la masse de l'éthanol ajoutée à l'étape a) est compris entre 0,05 et 0,15, de préférence entre 0,1 et 0,15.

5. Procédé selon l'une quelconque des revendications précédentes, **caractérisé en ce que** la masse du ou des principe(s) actif(s) est comprise entre 0,5% et 75% de la masse du mélange final support-principe(s) actif(s).

6. Procédé selon l'une quelconque des revendications précédentes, comprenant en outre une étape e) ajouter un ou plusieurs arôme(s) au mélange obtenu à l'étape d).

7. Procédé selon l'une quelconque des revendications précédentes, comprenant en outre l'ajout d'un ou plusieurs arôme(s) dans le premier récipient à l'étape a).

## Patentansprüche

1. Verfahren zur Herstellung von Aufgüssen oder Tees, die einen Träger, der aus ganzen Pflanzen oder Fragmenten von diesen gebildet wird, und einen oder mehrere Wirkstoff(e) umfassen, die auf der Oberfläche des Trägers adsorbiert sind, **dadurch gekennzeichnet, dass** es die folgenden Schritte umfasst:
a) in einem ersten Behälter, Mischen von Gummi arabicum mit Wasser und Ethanol,
b) in einem zweiten Behälter, Mischen von ganzen Pflanzen oder Fragmenten von diesen mit einem oder mehreren Wirkstoff(en),
c) Hinzugeben des in dem Schritt a) erhaltenen Gemischs zu dem in dem Schritt b) erhaltenen Gemisch, und
d) Trocknen des in dem Schritt c) erhaltenen Gemischs.

2. Verfahren nach Anspruch 1, **dadurch gekennzeichnet, dass** das Massenverhältnis zwischen (i) der Masse des Wassers und der Masse des Ethanols, die in dem Schritt a) hinzugegeben werden, und (ii) der Masse des in dem Schritt d) erhaltenen Gemischs zwischen 0,02 und 0,25 liegt.

3. Verfahren nach einem der vorhergehenden Ansprüche, **dadurch gekennzeichnet, dass** das Massenverhältnis zwischen (i) der Masse des Gummi arabicum, der in dem Schritt a) hinzugegeben wird, und (ii) der Masse des Wassers, das in dem Schritt a) hinzugegeben wird, zwischen 0,01 und 0,1, vorzugsweise zwischen 0,02 und 0,05 liegt.

4. Verfahren nach einem der vorhergehenden Ansprüche, **dadurch gekennzeichnet, dass** das Massenverhältnis zwischen (i) der Masse des Wassers, das in dem Schritt a) hinzugegeben wird, und (ii) der Masse des Ethanols, das in dem Schritt a) hinzugegeben wird, zwischen 0,05 und 0,15, vorzugsweise zwischen 0,1 und 0,15 liegt.

5. Verfahren nach einem der vorhergehenden Ansprüche, **dadurch gekennzeichnet, dass** das Massenverhältnis des oder der Wirkstoffs/e zwischen 0,5 % und 75 % der Masse des finalen Gemischs aus Träger und Wirkstoff(en) entspricht.

6. Verfahren nach einem der vorhergehenden Ansprüche, das ferner einen Schritt e) des Hinzugebens von einem oder mehreren Aroma/en zu dem in dem Schritt d) erhaltenen Gemisch umfasst.

7. Verfahren nach einem der vorhergehenden Ansprüche, das ferner die Zugabe von einem oder mehreren Aroma/en in dem ersten Behälter in dem Schritt a) umfasst.

## Claims

1. Process for the preparation of infusions or teas comprising a support consisting of whole plants or fragments thereof, and one or more active principle(s) adsorbed on the surface of said support, **characterized in that** it comprises the following steps:
a) in a first container, mix gum arabic with water and ethanol,
b) in a second container, mix whole plants or fragments thereof with one or more active principle(s),
c) add the mixture obtained in step a) to the mixture obtained in step b), and
d) dry the mixture obtained in step c).

2. Process according to claim 1, **characterized in that** the mass ratio between (i) the mass of water and the mass of ethanol added in step a) and (ii) the mass of the mixture obtained in step d) is between 0.02 and 0.25.

3. Process according to any one of the preceding claims, **characterized in that** the mass ratio between (i) the mass of gum arabic added in step a) and (ii) the mass of water added in step a) is between 0.01 and 0.1, preferably between 0.02 and 0.05.

4. Process according to any one of the preceding claims, **characterized in that** the mass ratio between (i) the mass of water added in step a) and (ii) the mass of ethanol added in step a) is between 0.05 and 0.15, preferably between 0.1 and 0.15.

5. Process according to any one of the preceding claims, **characterized in that** the mass of the active principle(s) is between 0.5% and 75% of the mass of the final support-active principle(s) mixture.

6. Process according to any one of the preceding claims, further comprising a step e) of adding one or more flavour(s) to the mixture obtained in step d).

7. Process according to any one of the preceding claims, further comprising adding one or more flavour(s) to the first container in step a).
